# EUROPÄISCHE PATENTSCHRIFT

(11) **EP 3 772 363 B1**
(45) Veröffentlichungstag und Bekanntmachung des Hinweises auf die Patenterteilung: **08.06.2022**
(21) Anmeldenummer: 20174527.0
(22) Anmeldetag: 13.05.2020
(51) Int. Cl.: A62B 35/00, A44B 11/25

(54) **GURT ZUM ANLEGEN AN EINE ZU SICHERNDE PERSON MIT EINER GURTBANDBRÜCKE**
BELT FOR APPLYING TO A PERSON THAT NEEDS TO BE SECURED WITH A BELT BRIDGE
CEINTURE À POSITIONNER SUR UNE PERSONNE À SÉCURISER COMPRENANT UN PONTET SANGLES

(30) Priorität: 06.08.2019 DE 102019121171
(43) Veröffentlichungstag der Anmeldung: 10.02.2021
(73) Patentinhaber: Skylotec GmbH, 56566 Neuwied (DE)
(72) Erfinder: Vitt, Philipp, 56077 Koblenz (DE); Bamberger, Heidi, 56567 Torney (DE)
(74) Vertreter: Michalski Hüttermann & Partner Patentanwälte mbB

(56) Entgegenhaltungen:
- EP-A1- 3 138 608
- EP-A1- 3 466 493
- WO-A1-2018/142084
- DE-A1- 10 211 560
- US-B1- 6 308 335

## Beschreibung

### Technisches Gebiet

Die Erfindung betrifft einen Gurt zum Anlegen an eine zu sichernde Person, insbesondere Klettergurt oder als persönliche Schutzausrüstung, mit einem Hüftgurt, einem Beingurt und einer Gurtbandbrücke, wobei der Hüftgurt und/oder der Beingurt beidseitig jeweils eine Öse aufweist. Die Erfindung betrifft ferner ein Verfahren zum Befestigen einer Gurtbandbrücke an einem Gurt zum Anlegen an eine zu sichernde Person, insbesondere Klettergurt oder als persönliche Schutzausrüstung, wobei der Gurt einen Hüftgurt, einen Beingurt und die Gurtbandbrücke aufweist und der Hüftgurt und/oder der Beingurt beidseitig jeweils eine Öse aufweist.

### Hintergrund der Erfindung

Als Gurt bezeichnet man ein Teil einer Sicherheitsausrüstung, der beim Baumpflegen, Klettern, Bergsteigen, Klettersteiggehen oder bei absturzgefährdeten Arbeiten am Körper getragen wird und durch den eine Verbindung zwischen der zu sichernden Person und einer Sicherungseinrichtung gegen Absturz oder einem Anseilpunkt hergestellt wird. Der Gurt ist in der Regel aus mehreren Schlaufen aufgebaut, die als Hüftgurt um die Körpermitte sowie als Beingurt um die Beine gelegt werden. Die Schlaufen sind an einem Anseilpunkt zusammengeführt, mit dem ein Sicherungsseil oder ein Karabiner als Sicherungseinrichtung gegen Absturz verbunden werden kann. Der Hüftgurt, der Beingurt und ein gegebenenfalls vorhandener Brustgurt sind an die Körpermaße der zu sichernden Person anpassbar, damit einerseits zwischen Person und Gurt auftretende Kräfte sicher übertragen und andererseits verhindert werden kann, dass die zu sichernde Person unbeabsichtigt aus dem Gurt rutscht. Gurte zum Klettern im Freizeitbereich sowie für den Arbeitsschutz sind vom grundsätzlichen Aufbau vergleichbar, haben jedoch unterschiedlichen Normen zu erfüllen. Während im Sportbereich beispielsweise die Norm EN 12277 einschlägig ist, gilt für Gurte zur Arbeitssicherung die Norm EN 361 sowie für Haltegurte die Norm EN 358.

Die Beinschlaufen des Beingurtes eines zur Baumpflege ausgestalteten Gurtes sind in der Regel über eine Gurtbandbrücke oder Seilverbindung verbunden, an welchem beispielsweise der als Anseilring ausgestalteter Anseilpunkt vorgesehen ist. Der Anseilring kann derart zwischen Enden der Gurtbandbrücke gleiten, so dass ein mit dem Gurt gesicherter Baumpfleger verschiedene Positionen relativ zu dem Baum einnehmen kann, ohne die Sicherung ändern zu müssen. Das Gleiten resultiert jedoch in einem erhöhten Verschleiß, so dass die Gurtbandbrücke regelmäßig ausgetauscht werden muss.

DE 102 11560 A1 beschreibt einen Sicherheits-Sitz- bzw. Haltegurt nach DIN EN 358, 361 und/oder 813, insbesondere Arbeitsgurt, zum Sichern einer Person bei Arbeiten an exponierten und/oder hochgelegenen Arbeitsstellen, mit einem einen Bauchgurt und Rückengurt umfassenden Hauptgurt sowie mit am Hauptgurt befestigten Beingurten, wobei eine Einhängeschlaufe zum Befestigen an einem Halteseil vorgesehen ist.

EP 3 466 493 A1 beschreibt einen Sicherheitgut mit einem Hüftgurt, einem Paar Beinschlaufen und mit ersten und zweiten seitlichen Befestigungspunkten.

US 4 788 941 A beschreibt eine Sicherheitsvorrichtung zur Verwendung bei der Betreuung von Kindern.

DE 200 22 993 U1 beschreibt einen Auffanggurt zur Sicherung einer Person vor einer Absturzgefahr, enthaltend einen Sitzgurtstrang, der um das Gesäß verlaufend und mit seinen Enden vor dem Oberkörper der Person liegend anzulegen ist, sowie zwei Beingurtstränge zur Umschließung der Oberschenkel, welche jeweils an einem Kopplungspunkt kraftübertragend sowie an einem Kreuzungspunkt gleitend mit dem Sitzgurtstrang verbunden sind.

DE 368 730 A beschreibt eine Ösenbefestigung für Handschuhverschlüsse und dergleichen, die darin besteht, daß die Öse zwischen zwei an den Außenrändern vernähte Stofflagen eingeschoben und derart angenäht ist, daß sich die Nähte an den Innenrändern der Öse entlang erstrecken und daß aaußerdem eine Sicherheitsnaht längs eines Schlitzes in einem Ansatz der Öse angebracht ist.

WO 93/03 219 A1 beschreibt Verbesserungen an und in Verbindung mit Seilen und insbesondere das Erkennen der Beschädigung eines Seiles infolge einer Verformung.

Auf dem Stand der Technik bekannte Gurtbandbrücken weisen an ihren Enden einknotbare Seile oder verschraubbare Ösen auf, die mit dem Beingurt verbindbar sind. Da Baumpfleger die Gurtbandbrücken in der Regel selbst tauschen, ist nicht immer sichergestellt, dass die Seile richtig eingeknotet sind oder Schrauben ausreichend fest angezogen sind. Zudem ist das Einknoten der Seile oder Auf- bzw. Zuschrauben eine manuelle und teils sehr umständliche Tätigkeit, die viel Zeit beansprucht. Die aus dem Stand der Technik bekannten Gurtbandbrücken, wenn auch seit Dekaden prinzipiell technisch unverändert, sind also nicht ideal hinsichtlich Sicherheit und Handling.

### Beschreibung der Erfindung

Ausgehend von dieser Situation ist es eine Aufgabe der Erfindung, einen Gurt mit einer auswechselbaren Gurtbandbrücke anzugeben, dessen Gurtbandbrücke wesentlich einfacherer und zugleich sicherer auswechselbar ist.

Die Aufgabe der Erfindung wird durch die Merkmale der unabhängigen Ansprüche gelöst. Vorteilhafte Ausgestaltungen sind in den Unteransprüchen angegeben.

Demnach wird die Aufgabe durch einen Gurt zum Anlegen an eine zu sichernde Person gelöst, insbesondere Klettergurt oder als persönliche Schutzausrüstung, mit einem Hüftgurt, einem Beingurt und einer Gurtbandbrücke, wobei
der Hüftgurt und/oder der Beingurt beidseitig jeweils eine Öse aufweist,
die Gurtbandbrücke an ihren Endbereichen jeweils eine Rahmenschnalle und eine Stegschnalle aufweist, und
die Gurtbandbrücke an ihren jeweiligen Endbereichen durch die jeweilige Stegschnalle geführt ist, das jeweilige Ende der Gurtbandbrücke durch die jeweilige Rahmenschnalle geführt und mit dem jeweiligen Endbereich der Gurtbandbrücke verbunden ist, so dass die jeweilige Stegschnalle und Rahmenschnalle beabstandet voneinander angeordnet sind und durch Hindurchführen der jeweiligen Stegschnalle zunächst durch die jeweilige Öse und daraufhin durch die jeweilige Rahmenschnalle der jeweilige Endbereich der Gurtbandbrücke an der jeweiligen Öse insbesondere durch Verklemmen der Stegschnalle an der Rahmenschnalle befestigbar ist.

Ein wesentlicher Aspekt des vorgeschlagenen Gurtes ist, dass die Gurtbandbrücke im Gegensatz zu aus dem Stand der Technik bekannten Lösungen einerseits ein besonders einfacher und andererseits in besonders sicherer Weise austauschbar ist. Bei aus dem Stand der Technik bekannten Lösungen sind die Endbereiche der Gurtbandbrücke in der Regel mit dem Gurt verknotet oder mittels Ösen verschraubt. Das Auf- und Zuschrauben ist wesentlich aufwendiger und zudem unsicherer, da sich bei Verwendung des Gurtes nicht richtig festgezogene Schrauben lösen und derart eine mit dem Gurt bzw. der Gurtbandbrücke gesicherte Person abstürzen kann. Analoges gilt für Knotverbindungen.

Bei der vorgeschlagenen Lösung wird die Stegschnalle der Gurtbandbrücke durch die Öse und sodann durch die Rahmenschnalle geführt, so dass insbesondere nach Verklemmen der Stegschnalle an der Rahmenschnalle der Endbereich der Gurtbandbrücke an der Öse fixiert ist. Verklemmen bedeutet insbesondere, dass die Stegschnalle auf der Rahmenschnalle aufliegt, insbesondere berührend aufliegt, so dass der mit der Stegschnalle verbundene Endbereich gegenüber der Rahmenschnalle fixiert ist. Zum Lösen des Endbereiches von der Gurtbandbrücke wird die Stegschnalle zunächst aus der Rahmenschnalle und sodann aus der Öse herausgeführt.

Die Rahmenschnalle weist bevorzugt eine einzige rechteckartige Öffnung auf, während die Stegschnalle zwei rechteckartige durch den Steg getrennte Öffnungen aufweist. Rahmenschnalle und Stegschnalle weisen bevorzugt eine rechteckartige Form auf, die insbesondere hinsichtlich ihrer Längserstreckung und/oder Quererstreckung korrespondieren. Derart kann, wenn die Stegschnalle mit ihrer Längsseite parallel oder annährend parallel auf der Längsseite Rahmenschnalle aufliegt, die Stegschnalle nicht durch die Öffnung der Rahmenschnalle ,hindurchflutschen', wird also durch die Rahmenschnalle gegen Lösen gesichert. Der Steg der Stegschnalle erstreckt sich bevorzugt parallel zu einer Längsseite der Stegschnalle. Bevorzugt erfolgt das Hindurchführen durch Verschwenken der Stegschnalle derart, dass die Stegschnalle mit ihrer Querseite voran durch die Öffnung der Rahmenschnalle, und ebenso durch die Öse, geführt wird. Das Verklemmen erfolgt bevorzugt durch Ausrichten der derart hindurchgeführten Stegschnalle, dass die Stegschnalle mit ihrer Längsseite parallel oder annährend parallel zu der Längsseite der Rahmenschnalle zu liegen kommt, also die Stegschnalle nicht durch die Öffnung der Rahmenschnalle hindurchflutschen' kann und derart gegen Lösen gesichert ist.

Die Gurtbandbrücke, auch Seilbrücke genannt, ist mit ihrem Ende voran bevorzugt zunächst um den Steg der Stegschnalle geführt und derart durch beide Öffnungen der Stegschnalle eine erste Schleife bildend hindurchgeführt. Von der ersten Schleife verläuft das Band der Gurtbandbrücke bevorzugt parallel zurück und ist mit seinem Ende bevorzugt unter Ausbildung einer zweiten Schlaufe durch die Rahmenschnalle geführt. Schließlich ist das Ende mit dem Band des Endbereiches verbunden, so dass Stegschnalle und Rahmenschnalle beabstandet voneinander an den beiden Schlaufen mit der Gurtbandbrücke verbunden und derart gehalten sind. Zwischen den Endbereichen kann ein Einbindepunkt in Form eines weiter unten beschriebenen Anseilpunktes vorgesehen sein.

Der Hüftgurt und/oder der Beingurt können wie aus dem Stand der Technik bekannt ausgeführt sein, beispielsweise eine Polsterung aufweisen, die von tragenden Einfassbändern umgeben und/oder eingefasst ist. Zudem können an dem Hüftgurt, der im Stand der Technik auch als Bauchgurt oder Lendenteil bezeichnet wird, Materialtragschlaufen und/oder eine Verstellschnalle, vorgesehen sin. Weiter bevorzugt umfassen der Hüftgurt und/oder der Beingurt ein oder mehrere Gurtbänder, vorgenannte Einfassbänder, einzelne Schnüre oder eine Kombination der vorgenannten Bänder bzw. Schnüre. Die an dem Hüftgurt und/oder an dem Beingurt vorgesehenen Polsterungen können aus einem atmungsaktiven Material ausgestaltet sein, um den Tragkomfort des Gurtes zu erhöhen, beispielsweise aus einem Abstandsgewirke, Abstandsgewebe, Abstandsgeflecht und/oder einer netzartigen Polsterung. Zudem kann die Polsterung eine eigene Quersteifigkeit und/oder stellenweise Querversteifung aufweisen, damit sich der Hüftgurt bzw. Beingurt auch unter Last oder Spannung formstabil verhält.

Zwar ist es grundsätzlich möglich, dass die Polsterung eine tragende Funktion übernimmt, jedoch nehmen bevorzugt die über die Polsterung laufenden Einfassbänder die Kräfte auf und wirken gleichzeitig als Tragbänder. Die Polsterung weist bevorzugt eine Dicke von weniger als 30 mm, vorzugsweise 20 mm auf. Als Bänder, insbesondere als Einfassbänder oder Tragbänder für den Hüftgurt und/oder für den Beingurt bzw. die Beinschlaufen und/oder für die Gurtbandbrücke finden bevorzugt Bänder aus hochfesten, synthetischen Materialien wie Polyethylen oder Polyamid Verwendung, die eine Breite von ≥ 20 mm und ≤ 50 mm aufweisen und/oder als Breit/Schmalgewebe ausgestaltet sind, nachfolgend Breit/Schmalband genannt. Der Anseilpunkt ist bevorzugt ausgestaltet, dass ein Seil, ein Karabiner, ein Steigschutzläufer oder dergleichen mit diesem verbindbar ist.

Zur Ausgestaltung der Ösen existieren verschiedene Möglichkeiten. In einer bevorzugten Weiterbildung sind die Ösen als Ösen mit Steg, als Stegschnallen oder als D-Ringe mit jeweiligem Steg ausgeführt. Die Ösen weisen bevorzugt zwei durch den Steg getrennte Öffnungen auf, wobei durch die hintere Öffnung bevorzugt Bänder des Hüftgurtes und/oder des Beingurtes geführt sind und der Endbereich der Gurtbandbrücke durch die vordere Öffnung führbar ist.

Gemäß einer anderen bevorzugten Weiterbildung weist der Beingurt beidseitig jeweils eine Beinschlaufe auf und die Ösen sind an jeweils einer Beinschlaufe und/oder jeweils an einer rechten und linken vorderen Seite des Gurtes vorgesehen. Bevorzugt sind die Ösen an Querseiten des Gurtes vorgesehen, insbesondere, bei angelegtem Gurt, an einer vorderen rechts und linken Querseite bzw. Hüfte der den Gurt tragenden Person angeordnet.

Nach einer weiteren bevorzugten Ausgestaltung ist das jeweilige Ende der Gurtbandbrücke mit dem jeweiligen Endbereich der Gurtbandbrücke derart vernäht, dass das Ende zwischen zwei Abschnitten des Endbereiches eingefasst ist. Die Naht fixiert derart drei Bandlagen der Gurtbandbrücke, nämlich die beiden jeweils die Rahmenschnalle und die Stegschnalle einfassenden Schlaufen. Die Naht kann sich zwischen Rahmenschnalle und Stegschnalle erstrecken, um derart Rahmenschnalle und Stegschnalle in ihrer Position relativ zu der Gurtbandbrücke zu fixieren. Bevorzugt ist die Naht benachbart zu der Rahmenschnalle angeordnet, wobei die die Rahmenschnalle einfassende Schlaufe kleiner als die die Stegschnalle einfassende Schlaufe sein kann, um derart die Stegschnalle gegenüber der Rahmenschnalle beweglicher zu fixieren.

In einer weiteren bevorzugten Ausgestaltung ist die Gurtbandbrücke zwischen den Endbereichen verwebt und bildet einen kreisrundartigen Querschnitt aus. Bevorzugt weist der Gurt bzw. dessen Bänder wenigstens teilweise ein Breit/Schmalband mit einem Breit/Schmal-Querschnitt auf, der an der Gurtbandbrücke zwischen den Endbereichen in den runden Querschnitt übergeht bzw. mit rundem Querschnitt gewebt ist. In einer bevorzugten Weiterbildung ist die Gurtbandbrücke in einem gesamten Verbindungsbereich zwischen den Endbereichen miteinander verwebt und/oder vernäht,. Durch das Vernähen wird die Reibung zwischen Gurtbandbrücke und Anseilpunkt beim Verschieben derselben gegeneinander verringert. Da die Gurtbandbrücke die höchstbeanspruchte Stelle des Gurtes ist, wird durch das Vernähen der Verschleiß an dieser Stelle reduziert, was in einer erhöhten Lebensdauer des Gurtes bzw. der Gurtbandbrücke resultiert. Bevorzugt weist die Gurtbandbrücke zwischen den Endbereichen einen runden Querschnitt insbesondere mit einem Durchmesser ≥ 4 mm und ≤ 8 mm auf. In einer weiteren besonders bevorzugten Ausgestaltung ist die Gurtbandbrücke aus wenigstens einem durchgehenden Faden gewebt. Durch Verwendung eines durchgehenden Fadens wird eine besonders hohe Stabilität erreicht und andererseits eine einfache Herstellung ermöglicht.

Nach einer bevorzugten Weiterbildung ist die Gurtbandbrücke zwischen den Endbereichen aus einem Kernfaden und einer den Kernfaden umhüllenden Verschleißschicht ausgeführt und ist die Verschleißschicht ausgestaltet, mit fortschreitendem Gebrauch der Gurtbandbrücke ihre Farbe und/oder die Farbintensität ihrer Farbe als Indikator für den Verschleiß der Gurtbandbrücke zu ändern, und/oder der Kernfaden aus einem Material gebildet ist, welches gegenüber der Verschleißschicht eine andere Farbe und/oder eine andere Farbintensität der Farbe aufweist. Bei der Benutzung des Gurtes ist es regelmäßig so, dass die Gurtbandbrücke an dem Anseilpunkt und/oder an einem Anseilring oder dergleichen scheuert. Dadurch nutzt sich die Verschleißschicht ab und der andersfarbige, bislang durch die Verschleißschicht abgedeckte Kernfaden kommt zum Vorschein. Die den Gurt benutzende Person erkennt in einfacher und vorteilhafter Weise durch die Farbänderung, dass die Gurtbandbrücke zur Beibehaltung der Sicherheit ausgetauscht werden soll, auch wenn weiterhin der Kernfaden und gegebenenfalls ein Teil der Verschleißschicht den Gurt sicher mit dem Anseilpunkt verbindet. Durch die den Kernfaden vorzugsweise vollständig umhüllenden Verschleißschicht wird also eine objektive Möglichkeit geschaffen, in verlässlicher Weise den Verschleiß der Gurtbandbrücke zu erkennen. Der Kernfaden und/oder die Verschleißschicht sind bevorzugt aus hochfesten, synthetischen Materialien wie Polyester oder Polyamid, beispielsweise Dyneema, ausgeführt. Besonders bevorzugt ist eine Mehrzahl miteinander verflochtener Kernfäden vorgesehen, wobei die Verschleißschicht ebenso aus miteinander verwebten Fäden ausgeführt ist. Bevorzugt umgibt die Verschleißschicht die gesamte Hüllfläche des Kernfadens. Noch weiter bevorzugt umhüllt die Verschleißschicht, in Schnittansicht, den Kernfaden derart, dass die Dicke der Verschleißschicht ≤ 5 %, ≤ 10 % oder ≤ 20 % des Durchmessers des Kernfadens beträgt.

Gemäß einer noch weiteren vorteilhaften Ausgestaltung weist die Gurtbandbrücke einen zwei oder eine Mehrzahl Anseilpunkte auf, die zwischen den Endbereichen angeordnet und mit der Gurtbandbrücke verbunden sind. Zur Ausgestaltung des Anseilpunkts existieren grundsätzlich verschiedene Möglichkeiten. Besonders bevorzugt ist der Anseilpunkt als Anseilschlaufe ausgeführt, durch die Gurtbandbrücke geführt ist. Ebenso kann der Anseilpunkt als Anseilring oder als Anseilöse ausgestaltet sein, insbesondere aus einem Metall bestehen. Bevorzugt ist die Gurtbandbrücke durch die Anseilschlaufe hindurchgeführt, so dass die Anseilschlaufe auf der Gurtbandbrücke zwischen den Endbereichen bzw. zwischen den Rahmenschnallen gleiten kann. In den Anseilpunkt ist bevorzugt ein Karabiner oder dergleichen einklinkbar, mittels dessen die mit dem Gurt gesicherte Person mit einem Auffanggerät oder dergleichen zur Sicherung gegen Absturz verbindbar ist.

In einer weiteren bevorzugten Ausgestaltung sind die jeweilige Rahmenschnalle und Stegschnalle wenigstens 5 cm oder 10 cm voneinander beabstandet angeordnet. Bevorzugt ist die Stegschnalle in ihrer Position flexibler fixiert als die Rahmenschnalle. Beispielsweise kann die Stegschnalle in Grenzen relativ zu der Rahmenschnelle bewegbar angeordnet sein, so dass der Abstand zwischen Rahmenschnalle und Stegschnalle zwischen 5 cm und 10 cm betragen kann.

Die Aufgabe wird weiterhin gelöst durch ein Verfahren zum Befestigen einer Gurtbandbrücke an einem Gurt zum Anlegen an eine zu sichernde Person, insbesondere Klettergurt oder als persönliche Schutzausrüstung, wobei
der Gurt einen Hüftgurt, einen Beingurt und die Gurtbandbrücke aufweist,
der Hüftgurt und/oder der Beingurt beidseitig jeweils eine Öse aufweist, und
die Gurtbandbrücke an ihren Endbereichen jeweils eine Rahmenschnalle und eine Stegschnalle aufweist und die Gurtbandbrücke an ihren jeweiligen Endbereichen durch die jeweilige Stegschnalle geführt ist, das jeweilige Ende der Gurtbandbrücke durch die jeweilige Rahmenschnelle geführt und mit dem jeweiligen Endbereich der Gurtbandbrücke verbunden ist, so dass die jeweilige Stegschnalle und Rahmenschnalle beabstandet voneinander angeordnet sind, mit dem Schritt:
   Hindurchführen der jeweiligen Stegschnalle zunächst durch die jeweilige Öse und daraufhin durch die jeweilige Rahmenschnalle zum Befestigen des jeweiligen Endbereiches der Gurtbandbrücke an der jeweiligen Öse.

Das vorgeschlagene Verfahren erlaubt es in besonders einfacher Weise, eine verschlissene Gurtbandbrücke auszuwechseln, wobei die eingewechselte Gurtbandbrücke in ebenso einfacher Weise sicher mit dem Gurt verbindbar ist.

Nach einer bevorzugten Weiterbildung des Verfahrens weist der Beingurt beidseitig jeweils eine Beinschlaufe auf und die Ösen sind an jeweils einer Beinschlaufe und/oder jeweils an einer rechten und linken vorderen Seite des Gurtes vorgesehen.

Weitere vorteilhafte Ausgestaltungen und Vorteile des Verfahrens ergeben sich für den Fachmann in Analogie zu dem zuvor beschriebenen Gurt.

### Kurze Beschreibung der Zeichnungen

Nachfolgend wird die Erfindung unter Bezugnahme auf die anliegenden Zeichnungen anhand eines bevorzugten Ausführungsbeispiels näher erläutert.

In den Zeichnungen zeigen
- Fig. 1: einen Gurt mit einer Gurtbandbrücke gemäß einem bevorzugten Aus-führungsbeispiel in einer schematischen Ansicht,
- Fig. 2: einen Ausschnitt des Gurtes gemäß Fig. 1 beim Befestigen der Gurt-bandbrücke an einem Beingurt des Gurtes in einer schematischen Ansicht,
- Fig. 3: den Ausschnitt des Gurtes gemäß Fig. 1 mit an dem Beingurt befestigter Gurtbandbrücke in einer schematischen Ansicht,
- Fig. 4: die Gurtbandbrücke des Gurtes gemäß Fig. 1 in einer schematischen Ansicht,
- Fig. 5: einen Endbereich der Gurtbandbrücke gemäß Fig. 4 in einer schematischen Ansicht, und
- Fig. 6: den Endbereich der Gurtbandbrücke gemäß Fig. 5 in einer weiteren schematischen Ansicht.

### Detaillierte Beschreibung der Ausführungsbespiele

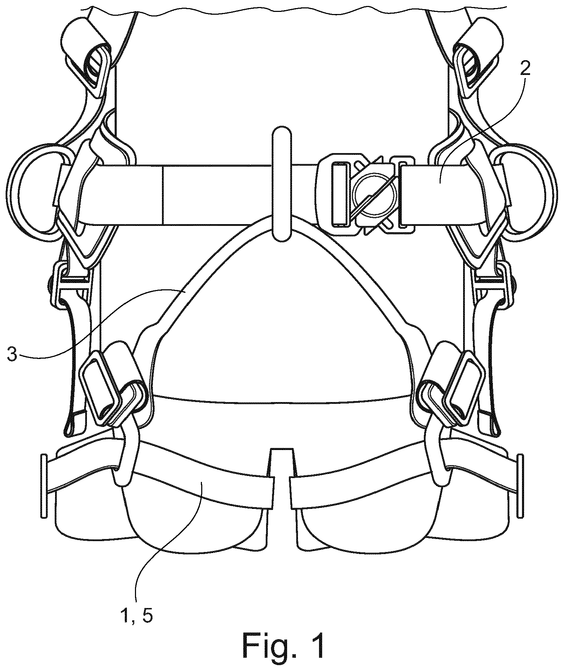

Fig. 1 zeigt einen Gurt zum Anlegen an eine zu sichernde Person gemäß einem bevorzugten Ausführungsbeispiel in einer schematischen Ansicht. Der Gurt, der insbesondere zur Baumpflege sowohl im privaten als auch im industriellen Bereich als Teil einer persönlichen Schutzausrüstung verwendbar ist, weist einen Hüftgurt 2, einen Beingurt 1 und eine Gurtbandbrücke 3 auf.

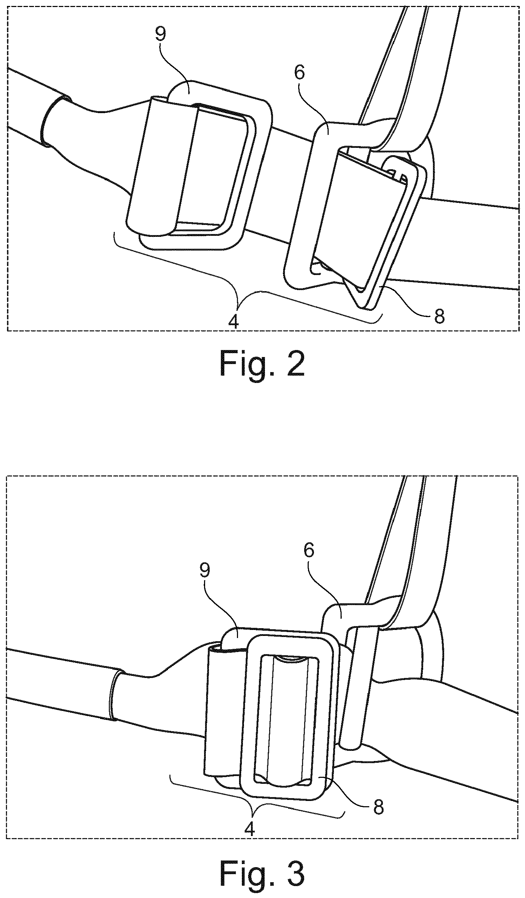

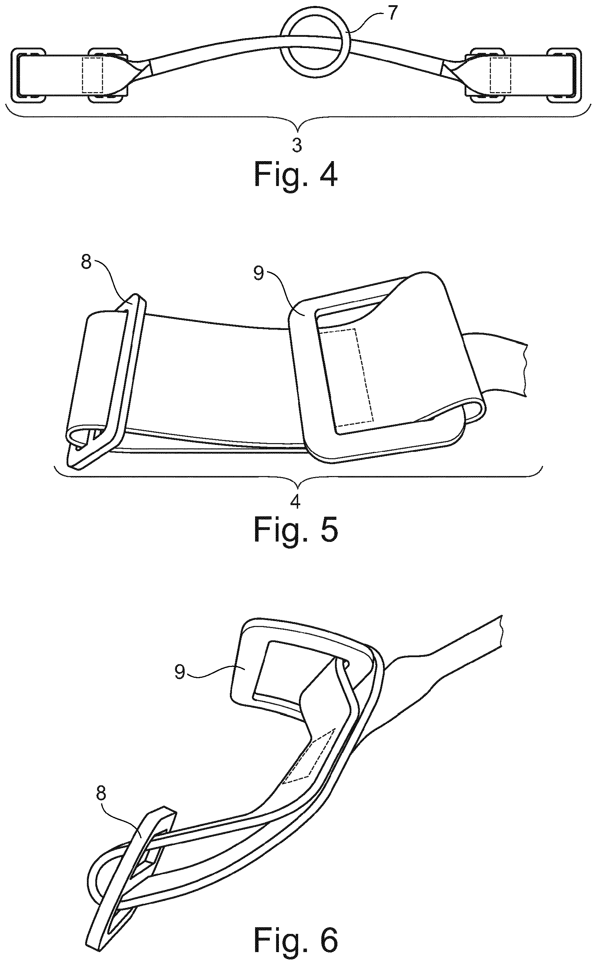

Fig. 2 zeigt einen Ausschnitt des Gurtes gemäß Fig. 1 beim Befestigen der Gurtbandbrücke 3 an dem Beingurt 1 während Fig. 3 den Ausschnitt mit an dem Beingurt 1 befestigter Gurtbandbrücke 3 jeweils in einer schematischen Ansicht zeigt. In Fig. 4 ist die Gurtbandbrücke 3 des Gurtes gemäß Fig. 1 in einer schematischen Ansicht gezeigt, während Figs. 5 und 6 jeweils einen Endbereich 4 der Gurtbandbrücke 3 gemäß Fig. 4 in einer schematischen Ansicht zeigt.

Der Beingurt 1 weist zwei Beinschlaufen 5 auf, an denen der in der Figur gegenüber dem Beingurt 1 oberhalb angeordnete Hüftgurt 2 mittels zweier in der Figur senkrecht verlaufender und beidseitig an Querseiten des Gurtes vorgesehener Verbindungsbänder befestigt ist. Oberhalb des Hüftgurtes 2 ist mit diesem verbunden ein Brustgurt vorgesehen, der beidseitig an Querseiten der Person an dem Hüftgurt befestigt ist. Ebenso an den Querseiten sind an dem Hüftgurt 2 beidseitig Materialtragschlaufen angeordnet. Hüftgurt 2, Beingurt 1, Brustgurt und Gurtbandbrücke 3 sind aus Bändern aus einem hochfesten, synthetischen Material wie Polyester oder Polyamid gestaltet und weisen einen breit/schmal Querschnitt auf. Hüftgurt 2, Beingurt 1 bzw. Beinschlaufen 5 und Brustgurt weisen ferner eine innenliegende Polsterung auf.

An den Querseiten ist an dem Beingurt 1 beidseitig vorne rechts und links jeweils eine Öse 6 vorgesehen, die, wie aus Fig. 2 zu erkennen, als D-Ring Öse mit Steg und entsprechend mit zwei Öffnungen ausgeführt ist. Durch die in Fig. 2 rechts dargestellte Öffnung sind Bänder der Beinschlaufe 5 sowie des Hüftgurtes 2 geführt, während die vordere Öffnung wie im Folgenden beschrieben zum Befestigen jeweils eines Endbereiches 4 der Gurtbandbrücke 3 dient. Die Gurtbandbrücke 3 erstreckt sich zwischen den beiden Ösen 6 über die Längsseite des Gurtes bzw. an der Hüfte der mit dem Gurt gesicherten Person über eine Länge von etwa 30 cm. Da die Endbereiche 4 miteinander vernäht sind, wie nachfolgend beschrieben, beträgt die Gesamtlänge der aus einem Breit/Schmalband ausgeführten Gurtbandbrücke 3 etwa 50 cm. Prinzipiell kann die Gurtbandbrücke 3 in verschiedenen Längen verfügbar sein, je nach Größe der Person und/oder Verwendungszweck.

Zwischen den beiden gegenüberliegenden Endbereichen 4 ist die Gurtbandbrücke 3 durch einen oder zwei metallene Anseilpunkte 7 - in den Figuren ist nur einziger Anseilpunkt 7 gezeigt - als Anseilschlaufe hindurchgeführt, an dem ein Karabiner oder dergleichen einklinkbar ist, mittels dessen die mit dem Gurt gesicherte Person mit einem Auffanggerät oder dergleichen zur Sicherung gegen Absturz verbindbar ist. Das Breit/Schmalband der Gurtbandbrücke 3 ist zwischen den beiden gegenüberliegenden Endbereichen 4 einen kreisrundartigen Querschnitt ausbildend verwebt.

Ferner ist die Gurtbandbrücke 3 zwischen den Endbereichen 4 aus einem Kernfaden und einer den Kernfaden umhüllenden Verschleißschicht ausgeführt. Die Verschleißschicht ändert mit fortschreitendem Gebrauch der Gurtbandbrücke 3 ihre Farbe und die Farbintensität ihrer Farbe, als Indikator für den Verschleiß der Gurtbandbrücke 3. Zudem ist der Kernfaden aus einem Material gebildet ist, welches gegenüber der Verschleißschicht eine andere Farbe und eine andere Farbintensität der Farbe aufweist, so dass der Verschleiß einfach zu detektieren ist.

Die Gurtbandbrücke 3 weist an ihren Endbereichen 4 jeweils eine Rahmenschnalle 9 und eine Stegschnalle 8 auf. An jedem Endbereich 4 ist ein jeweiliges Endes des Bandes der Gurtbandbrücke 3 zunächst durch die erste Öffnung der Stegschnalle 8, um den Steg der Stegschnalle 8 sowie durch die zweite Öffnung der Stegschnalle 8 in einer halbkreisförmigen Schlaufe, in Seitansicht, geführt. Das Ende verläuft daraufhin etwa 10 cm parallel mit dem sich Richtung Mitte der Gurtbandbrücke 3 erstreckenden Band zurück, ist durch die Rahmenschnalle 9 in einer halbkreisförmigen Schlaufe, in Seitansicht, geführt, und verläuft wieder ein Stück zurück Richtung Stegschnalle 8.

Das Ende des Bandes ist mit dem sich hin zur Stegschnalle 8 und von der Stegschnalle 8 zurück zur Rahmenschnalle 9 erstreckenden Endbereich 4 der Gurtbandbrücke 3 derart vernäht, dass das Ende zwischen diesen beiden Abschnitten des Endbereiches 4 mittig eingefasst ist. Derart sind die Stegschnalle 8 und die Rahmenschnalle 9 etwa 5 bis 10 cm beabstandet voneinander angeordnet und an der Gurtbandbrücke 3 fixiert. Die Naht ist benachbart zu der Rahmenschnalle 9 angeordnet, so dass die die Rahmenschnalle 9 einfassende Schlaufe kleiner als die die den Steg der Stegschnalle 8 einfassende Schlaufe ist.

Durch Hindurchführen einer jeweiligen Stegschnalle 8 der Gurtbandbrücke 3 zunächst durch die jeweilige Öse 6 des Gurtes, siehe Fig. 2, und daraufhin, nach Ausbildung einer halbkreisförmigen Schlaufe, durch die jeweilige Rahmenschnalle 9 der Gurtbandbrücke 3, siehe Fig. 3, lässt sich der jeweilige Endbereich 4 der Gurtbandbrücke 3 an der jeweiligen Öse 6 in einfacher Weise befestigen und in ebenso einfacher Weise wieder lösen, um eine verschlissene Gurtbandbrücke 3 auszutauschen. Zum Hindurchführen wird die Stegschnalle 8 mit ihrer Querseite voran durch die Öse 6 und sodann, eine Schlaufe bildend, durch die Rahmenschnalle 9 geführt, und schließlich gegenüber der Rahmenschnalle 9 verschwenkt, so dass die Stegschnalle 8 auf der Rahmenschnalle 9 derart zu liegen kommt, dass die jeweiligen Quer- und Längsseiten parallel oder annähernd parallel zueinander und aufeinander zu liegen kommen, siehe Fig. 3. In dieser Position ist die Stegschnalle 8 durch die Rahmenschnalle 9 fixiert bzw. verklemmt, so dass die durch die Stegschnalle 6 geführte Schlaufe der Gurtbandbrücke 3 mit dieser verbunden ist.

Die beschriebenen Ausführungsbeispiele sind lediglich Beispiele, die im Rahmen der Ansprüche auf vielfältige Weise modifiziert und/oder ergänzt werden können. Jedes Merkmal, das für ein bestimmtes Ausführungsbeispiel beschrieben wurde, kann eigenständig oder in Kombination mit anderen Merkmalen in einem beliebigen anderen Ausführungsbeispiel genutzt werden. Jedes Merkmal, dass für ein Ausführungsbeispiel einer bestimmten Kategorie beschrieben wurde, kann auch in entsprechender Weise in einem Ausführungsbeispiel einer anderen Kategorie eingesetzt werden.

**Bezugszeichenliste**

| | |
|---|---|
| Beingurt | 1 |
| Hüftgurt | 2 |
| Gurtbandbrücke | 3 |
| Endbereich | 4 |
| Beinschlaufe | 5 |
| Öse | 6 |
| Anseilpunkt | 7 |
| Stegschnalle | 8 |
| Rahmenschnalle | 9 |

## Patentansprüche

1. Gurt zum Anlegen an eine zu sichernde Person, insbesondere Klettergurt oder als persönliche Schutzausrüstung, mit einem Hüftgurt (2), einem Beingurt (1) und einer Gurtbandbrücke (3), wobei
der Hüftgurt (2) und/oder der Beingurt (1) beidseitig jeweils eine Öse (6) aufweist,
die Gurtbandbrücke (3) an ihren Endbereichen (4) jeweils eine Rahmenschnalle (9) und eine Stegschnalle (8) aufweist, und
die Gurtbandbrücke (3) an ihren jeweiligen Endbereichen (4) durch die jeweilige Stegschnalle (8) geführt ist, das jeweilige Ende der Gurtbandbrücke (3) durch die jeweilige Rahmenschnalle (8) geführt und mit dem jeweiligen Endbereich der Gurtbandbrücke (3) verbunden ist, so dass die jeweilige Stegschnalle (8) und Rahmenschnalle (9) beabstandet voneinander angeordnet sind und durch Hindurchführen der jeweiligen Stegschnalle (8) zunächst durch die jeweilige Öse (6) und daraufhin durch die jeweilige Rahmenschnalle (9) der jeweilige Endbereich (4) der Gurtbandbrücke (3) an der jeweiligen Öse (6) befestigbar ist.

2. Gurt nach dem vorhergehenden Anspruch, wobei die Ösen (6) als Ösen mit Steg, als Stegschnallen oder als D-Ringe mit jeweiligem Steg ausgeführt sind.

3. Gurt nach einem der vorhergehenden Ansprüche, wobei der Beingurt (1) beidseitig jeweils eine Beinschlaufe (5) aufweist und die Ösen (6) an jeweils einer Beinschlaufe (5) und/oder jeweils an einer rechten und linken vorderen Seite des Gurtes vorgesehen sind.

4. Gurt nach einem der vorhergehenden Ansprüche, wobei das jeweilige Ende der Gurtbandbrücke (3) mit dem jeweiligen Endbereich (4) der Gurtbandbrücke (3) derart vernäht ist, dass das Ende zwischen zwei Abschnitten des Endbereiches (4) eingefasst ist.

5. Gurt nach einem der vorhergehenden Ansprüche, wobei die Gurtbandbrücke (3) zwischen den Endbereichen (4) verwebt einen kreisrundartigen Querschnitt ausbildet.

6. Gurt nach dem vorhergehendem Anspruch, wobei die Gurtbandbrücke (3) zwischen den Endbereichen (4) aus einem Kernfaden und einer den Kernfaden umhüllende Verschleißschicht ausgeführt ist und die Verschleißschicht ausgestaltet ist, mit fortschreitendem Gebrauch der Gurtbandbrücke (3) ihre Farbe und/oder die Farbintensität ihrer Farbe als Indikator für den Verschleiß der Gurtbandbrücke (3) zu ändern, und/oder der Kernfaden aus einem Material gebildet ist, welches gegenüber der Verschleißschicht eine andere Farbe und/oder eine andere Farbintensität der Farbe aufweist.

7. Gurt nach einem der vorhergehenden Ansprüche, wobei die Gurtbandbrücke (3) einen Anseilpunkt (7) aufweist, der zwischen den Endbereichen (4) angeordnet und mit der Gurtbandbrücke (3) verbunden ist.

8. Gurt nach einem der vorhergehenden Ansprüche 1, 3 bis 7, wobei die jeweilige Rahmenschnalle (9) und Stegschnalle (8) wenigstens 5 cm oder 10 cm voneinander beabstandet sind.

9. Verfahren zum Befestigen einer Gurtbandbrücke (3) an einem Gurt zum Anlegen an eine zu sichernde Person, insbesondere Klettergurt oder als persönliche Schutzausrüstung, wobei
der Gurt einen Hüftgurt (2), einen Beingurt (1) und die Gurtbandbrücke (3) aufweist,
der Hüftgurt (2) und/oder der Beingurt (1) beidseitig jeweils eine Öse (6) aufweist, und
die Gurtbandbrücke (3) an ihren Endbereichen (4) jeweils eine Rahmenschnalle (9) und eine Stegschnalle (8) aufweist und die Gurtbandbrücke (3) an ihren jeweiligen Endbereichen (4) durch die jeweilige Stegschnalle (8) geführt ist, das jeweilige Ende der Gurtbandbrücke (3) durch die jeweilige Rahmenschnalle (9) geführt und mit dem jeweiligen Endbereich (4) der Gurtbandbrücke (3) verbunden ist, so dass die jeweilige Stegschnalle (8) und Rahmenschnalle (9) beabstandet voneinander angeordnet sind, mit dem Schritt:
Hindurchführen der jeweiligen Stegschnalle (8) zunächst durch die jeweilige Öse (6) und daraufhin durch die jeweilige Rahmenschnalle (9) zum Befestigen des jeweiligen Endbereiches (4) der Gurtbandbrücke (3) an der jeweiligen Öse (6).

10. Verfahren nach dem vorhergehenden Anspruch 9, wobei der Beingurt (1) beidseitig jeweils eine Beinschlaufe (5) aufweist und die Ösen (6) an jeweils einer Beinschlaufe (5) und/oder jeweils an einer rechten und linken vorderen Seite des Gurtes vorgesehen sind.

## Claims

1. Harness for use on a person to be secured, in particular a climbing harness or a personal protective equipment, comprising a waist belt (2), a leg belt (1) and a webbing bridge (3), wherein
the waist belt (2) and/or the leg belt (1) each comprise an eyelet (6) on both sides,
the webbing bridge (3) respectively comprises a frame buckle (9) and a triglide (8) at its end regions (4), and
the webbing bridge (3) is passed at its respective end regions (4) through the respective triglide (8), the respective end of the webbing bridge (3) is passed through the respective frame buckle (9) and is connected to the respective end region of the webbing bridge (3), so that the respective triglide (8) and frame buckle (9) are arranged at a distance from one another and, by passing the respective triglide (8) first through the respective eyelet (6) and then through the respective frame buckle (9), the respective end region (4) of the webbing bridge (3) can be attached to the respective eyelet (6).

2. Harness according to the preceding claim, wherein the eyelets (6) are configured as eyelets comprising a web, as triglides or as D-rings comprising a respective web.

3. Harness according to any one of the preceding claims, wherein the leg belt (1) respectively comprises a leg loop (5) on both sides and the eyelets (6) are respectively provided at a leg loop (5) and/or respectively at a right and a left front side of the harness.

4. Harness according to any one of the preceding claims, wherein the respective end of the webbing bridge (3) is sewn to the respective end region (4) of the webbing bridge (3) in such a way that the end is enclosed between two portions of the end region (4).

5. Harness according to any one of the preceding claims, wherein the webbing bridge (3), interwoven between the end regions (4), forms a circular cross-section.

6. Harness according to the preceding claim, wherein the webbing bridge (3) between the end regions (4) is made of a core thread and a wear layer wrapping the core thread, and wherein the wear layer is configured to change its color and/or the color intensity of its color with progressive use of the webbing bridge (3) as an indicator of the wear of the webbing bridge (3), and/or the core thread is formed from a material which has a different color and/or a different color intensity of the color compared with the wear layer.

7. Harness according to any of the preceding claims, wherein the webbing bridge (3) comprises a roping point (7) arranged between the end regions (4) and connected to the webbing bridge (3).

8. Harness according to any one of the preceding claims 1, 3 to 7, wherein the respective frame buckle (9) and triglide (8) are spaced at least 5 cm or 10 cm apart.

9. Method of attaching a webbing bridge (3) to a harness for use on a person to be secured, in particular a climbing harness or a personal protective equipment, wherein
the harness comprises a waist belt (2), a leg belt (1) and the webbing bridge (3),
the waist belt (2) and/or the leg belt (1) respectively comprise an eyelet (6) on both sides, and
the webbing bridge (3) comprises at its end regions (4) respectively a frame buckle (9) and a triglide (8), and the webbing bridge (3) is passed at its respective end regions (4) through the respective triglide (8), the respective end of the webbing bridge (3) is passed through the respective frame buckle (9) and is connected to the respective end region (4) of the webbing bridge (3), so that the respective triglide (8) and frame buckle (9) are arranged spaced apart from one another,
comprising the step:
passing the respective triglide (8) first through the respective eyelet (6) and subsequently through the respective frame buckle (9) for attaching the respective end region (4) of the webbing bridge (3) to the respective eyelet (6).

10. Method according to the preceding claim 9, wherein the leg belt (1) respectively comprises a leg loop (5) on both sides, and the eyelets (6) are provided at a respective leg loop (5) and/or respectively at a right and left front side of the harness.

## Revendications

1. Ceinture à positionner sur une personne à sécuriser, en particulier harnais d'escalade, ou pour servir d'équipement de protection individuel, pourvue d'une ceinture abdominale (2), d'une ceinture pour les jambes (1) et d'un pont de sangles de ceinture (3), dans laquelle
la ceinture abdominale (2) et/ou la ceinture pour les jambes (1) présentent respectivement des deux côtés un œillet (6),
le pont de sangles de ceinture (3) présente au niveau de ses régions d'extrémité (4) respectivement une boucle de cadre (9) et une boucle à barre (8), et
le pont de sangles de ceinture (3) est passé au niveau de ses régions d'extrémité (4) respectives à travers la boucle à barre (8) respective, l'extrémité respective du pont de sangles de ceinture (3) est passée à travers la boucle de cadre (8) [IM1]respective et est reliée avec la région d'extrémité respective du pont de sangles de ceinture (3) de sorte que la boucle à barre (8) respective et la boucle de cadre (9) sont disposées espacées l'une par rapport à l'autre et peuvent être fixées à l'œillet (6) respectif par le passage de la boucle à barre (8) tout d'abord à travers l'oeillet (6) respectif, et ensuite à travers la boucle de cadre (9) respective de la région d'extrémité (4) respective du pont de sangles de ceinture (3).

2. Ceinture selon la revendication précédente, dans laquelle les œillets (6) sont conçus sous forme d'oeillets à barre, sous forme de boucles à barres ou sous forme d'anneaux en D avec une barre respective.

3. Ceinture selon l'une des revendications précédentes, dans laquelle la ceinture pour les jambes (1) présente respectivement des deux côtés une boucle pour la jambe (5) et les œillets (6) sont prévus respectivement sur une sangle pour jambe (5) et/ou respectivement sur un côté droit et un côté gauche de la ceinture.

4. Ceinture selon l'une des revendications précédentes, dans laquelle l'extrémité respective du pont de sangles de ceinture (3) est cousue avec la région d'extrémité (4) respective du pont de sangles de ceinture (3) de telle manière que l'extrémité est incluse entre deux segments de la région d'extrémité (4).

5. Ceinture selon l'une des revendications précédentes, dans laquelle le pont de sangles de ceinture (3) tissé entre les régions d'extrémité (4) forme une section transversale de forme circulaire.

6. Ceinture selon la revendication précédente, dans laquelle le pont de sangles de ceinture (3) entre les régions d'extrémité (4) est conçu à partir d'un fil de cœur et d'une couche d'usure enveloppant le fil de cœur et la couche d'usure est conçue pour modifier sa couleur et/ou son intensité de couleur avec une utilisation progressive, servant d'indicateur de l'usure du pont de sangles de ceinture (3), et/ou le fil de cœur est conçu dans une matière, laquelle présente une couleur différente et/ou une autre intensité de couleur de la couleur par rapport à la couche d'usure.

7. Ceinture selon l'une des revendications précédentes, dans laquelle le pont de sangles de ceinture (3) présente un point de fixation de corde (7) qui est disposé entre les régions d'extrémité (4) et est relié avec le pont de sangles de ceinture (3).

8. Ceinture selon l'une des revendications précédentes 1, 3 à 7, dans laquelle la boucle de cadre (9) et la boucle à barre (8) sont espacées d'au moins 5 cm ou 10 cm l'une de l'autre.

9. Procédé de fixation d'un pont de sangles de ceinture (3) à une ceinture à positionner sur une personne à sécuriser, en particulier harnais d'escalade, ou pour servir d'équipement de protection individuel, dans lequel
la ceinture présente une ceinture abdominale (2), une ceinture pour les jambes (1) et un pont de sangles de ceinture (3),
la ceinture abdominale (2) et/ou la ceinture pour les jambes (1) présentent respectivement des deux côtés un œillet (6),
le pont de sangles de ceinture (3) présente au niveau de ses régions d'extrémité (4) respectivement une boucle de cadre (9) et une boucle à barre (8), et le pont de sangles de ceinture (3) est passé au niveau de ses régions d'extrémité (4) respectives à travers la boucle à barre (8) respective, l'extrémité respective du point de sangles de ceinture (3) est passée à travers la boucle de cadre (8) respective et est reliée avec la région d'extrémité respective du pont de sangles de ceinture (3) de sorte que la boucle à barre (8) respective et la boucle de cadre (9) sont disposées espacées l'une par rapport à l'autre, avec l'étape :
de passage de la boucle à barre respective (8) tout d'abord à travers l'œillet (6) respectif et ensuite à travers la boucle de cadre (9) respective pour la fixation de la région d'extrémité (4) respective du pont de sangles de ceinture (3) à l'œillet (6) respectif.

10. Procédé selon la revendication précédente 9, dans lequel la ceinture pour les jambes (1) présente respectivement des deux côtés une boucle pour la jambe (5) et les œillets (6) sont prévus respectivement sur une sangle pour jambe (5) et/ou respectivement sur un côté droit et un côté gauche de la ceinture.
